# EUROPÄISCHE PATENTANMELDUNG

(11) **EP 4 570 150 A1**
(43) Veröffentlichungstag der Anmeldung: **18.06.2025**
(21) Anmeldenummer: 24161601.0
(22) Anmeldetag: 05.03.2024
(51) Int. Cl.: A47K 3/40, B32B 5/18

(54) **DUSCHWANNE, DUSCHANORDNUNG UND VERWENDUNG**

(30) Priorität: 14.12.2023 DE 202023002588 U; 15.02.2024 DE 202024100723 U
(71) Anmelder: Schulte Duschkabinenbau GmbH & Co. KG, 59846 Sundern-Hachen (DE)
(72) Erfinder: Bartscher, Frederic, 59939 Olsberg (DE); Rolfes, Hartwig, 59846 Sundern (DE); van Hoorn, Marco, 59846 Sundern-Allendorf (DE)
(74) Vertreter: Von Rohr Patentanwälte Partnerschaft mbB

(57) **Zusammenfassung**

Es wird eine Duschwanne vorgeschlagen, wobei die Hartschaumschicht zumindest im Wesentlichen oder ausschließlich aus XPS hergestellt ist und/oder die Duschwanne eine sich zumindest im Wesentlichen bis in den Randbereich der Duschwanne erstreckende Trägerplatte auf der Unterseite der Hartschaumschicht zur Lastverteilung aufweist. Die Duschwanne ist dadurch gekennzeichnet, dass das XPS eine Dichte von mehr als 20 kg/m³ aufweist. Weiter werden eine Duschanordnung und Verwendung der Duschwanne vorgeschlagen.

## Beschreibung

Die vorliegende Erfindung betrifft eine Duschwanne gemäß dem Oberbegriff des Anspruchs 1, eine Duschanordnung mit einer solchen Duschwanne gemäß dem Oberbegriff des Anspruchs 13 sowie eine Verwendung einer Duschwanne gemäß dem Oberbegriff des Anspruchs 15.

Es sind unterschiedliche Duschwannen bekannt. Diese haben verschiedene Nachteile. Duschwannen aus Polymerbeton sind sehr schwer, aber stabil. Duschwannen aus gegossenen Kunststoffplatten sind ebenfalls relativ schwer und weisen keine optimale Oberfläche auf. Duschwannen aus Acryl bedürfen einer besonderen Tragestruktur und sind teilweise verhältnismäßig nachgiebig. Es werden daher auch Duschwannen aus Acryl als Deckschicht und mit einer Hartschaumschicht aus Polyurethan angeboten.

Der vorliegenden Erfindung liegt die Aufgabe zugrunde, eine verbesserte Duschwanne und eine verbesserte Duschanordnung anzugeben, die eine einfache, schnelle und/oder kostengünstige Montage ermöglichen.

Die obige Aufgabe wird durch eine Duschwanne gemäß Anspruch 1, durch eine Duschanordnung gemäß Anspruch 13 oder eine Verwendung gemäß Anspruch 15 gelöst. Vorteilhafte Weiterbildungen sind Gegenstand der Unteransprüche.

Gemäß einem ersten Aspekt der vorliegenden Erfindung weist die vorschlagsgemäße Duschwanne unter ihrer Hartschaumschicht eine Trägerplatte auf, die sich zumindest im Wesentlichen bis in den Rand der Duschwanne erstreckt und so eine optimale Lastverteilung sowie hohe Stabilität der Duschwanne ermöglicht. Dies ist außerdem einem einfachen Einbau der Duschwanne zuträglich.

Vorzugsweise wird die Duschwanne unterseitig durch Füße auf einem bauseitigen Untergrund abgestützt. Besonders bevorzugt stützen die Füße unmittelbar die Trägerplatte, sodass keine sonstige Tragstruktur erforderlich ist.

Die Füße können beispielsweise zunächst am Untergrund befestigt und insbesondere auf die gewünschte Höhe eingestellt werden, sodass die Duschwanne dann einfach auf den Füßen platziert wird. So können optimale Positionen für die Füße in Abhängigkeit vom bauseitigen Untergrund gewählt werden.

Alternativ oder zusätzlich ist es auch möglich, die Füße direkt an der Duschwanne bzw. deren Träger zu befestigen, insbesondere anzukleben.

Vorschlagsgemäß ergibt sich so eine besonders bevorzugte Duschanordnung mit der Duschwanne und Verwendung der Duschwanne, die besonders einfach herzustellen ist und sich durch eine hohe Stabilität auszeichnet.

Gemäß einem anderen, auch unabhängig realisierbaren Aspekt der vorliegenden Erfindung weist die vorschlagsgemäße Duschwanne vorzugsweise eine Hartschaumschicht aus XPS auf. Dies ermöglicht die Herstellung einer leichten, aber dennoch sehr stabilen Duschwanne, insbesondere wobei XPS geschlossenzellig und hydrophob ist und sich daher optimal für die Herstellung eignet.

Gemäß einem weiteren, auch unabhängigen Aspekt der vorliegenden Erfindung weist die Duschwanne vorzugsweise eine Abdeckung in einer Ablauföffnung auf, wobei die Abdeckung randseitig beanstandet in der Ablauföffnung angeordnet ist. Die Abdeckung ist insbesondere formschlüssig durch ein oder mehrere unterseitige Haltelemente und/oder in Eckbereichen gehalten und/oder plattenartig ausgebildet und mit einem Verstärkungselement versehen. Optional, alternativ oder zusätzlich erstreckt sich eine Deckschicht der Duschwanne bis in die Ablauföffnung und besonders bevorzugt über die Eckbereiche und/oder unterseitigen Haltelemente. Dies ermöglicht eine sehr stabile, einfach zu reinigende Ausführung der Duschwanne, wobei auch eine gute Wasserabführung einfach realisierbar ist.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Zeichnung. Es zeigt:
- Fig. 1: eine perspektivische Ansicht einer vorschlagsgemäßen Duschwanne;
- Fig. 2: einen schematischen ausschnittsweisen Schnitt einer vorschlagsgemäßen Duschanordnung mit der Duschwanne im Randbereich; und
- Fig. 3: einen schematischen ausschnittsweisen Schnitt der vorschlagsgemäßen Duschwanne im Bereich einer Ablauföffnung.

In den teilweise nicht maßstabsgerechten, nur schematischen Figuren werden für gleiche oder gleichartige Bauteile und Komponenten dieselben Bezugszeichen verwendet, wobei sich entsprechende Eigenschaften und Vorteile ergeben, auch wenn eine wiederholte Beschreibung weggelassen ist.

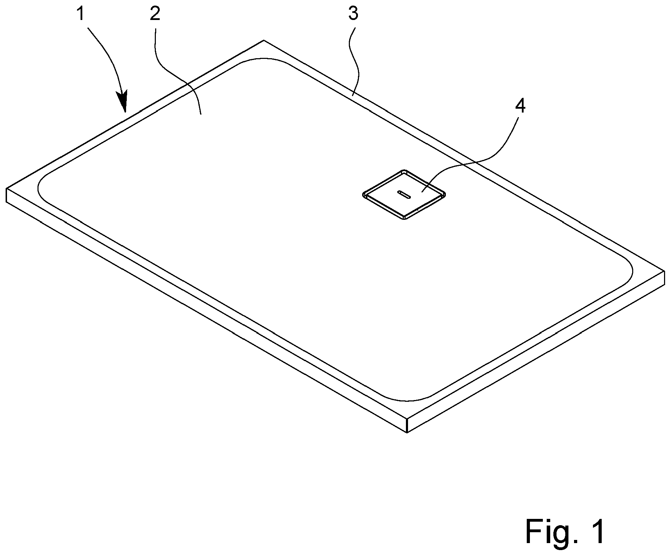

Fig. 1 zeigt in einer schematischen Ansicht eine vorschlagsgemäße Duschwanne 1 gemäß einer bevorzugten Ausführungsform.

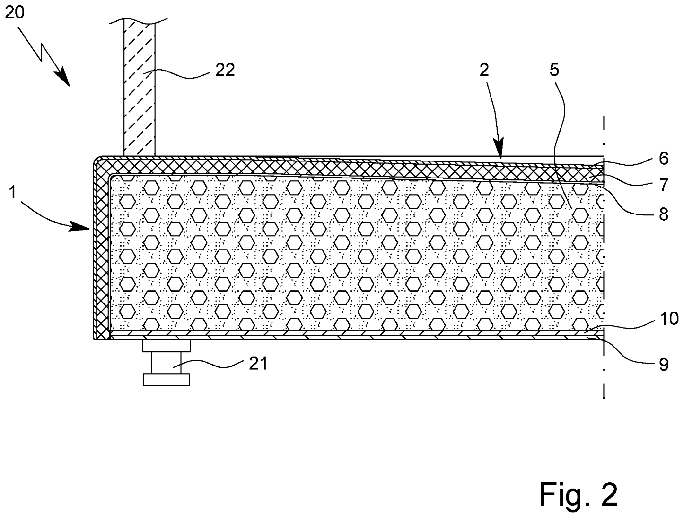

Fig. 2 zeigt eine Duschanordnung 20 mit der Duschwanne 1 in einem schematischen ausschnittsweisen Schnitt in einem Randbereich der Duschwanne 1.

Die Duschanordnung 20 weist wie beim Darstellungsbeispiel vorzugsweise ein oder mehrere Füße 21 auf, die die Duschwanne 1 tragen. Jedoch sind auch andere konstruktive Lösungen möglich.

Die Duschanordnung 20 weist vorzugsweise mindestens eine Trennwand 22 auf, die in Figur 2 nur schematisch angedeutet ist und beispielsweise in einem Randbereich der Duschwanne 1 beziehungsweise Trittfläche 2 und/oder auf einem Rand 3 der Duschwanne 1 angeordnet ist. Jedoch sind auch andere konstruktive Lösungen möglich.

Vorzugsweise begrenzt die beispielsweise als Scheibe ausgeführte Trennwand 22 einen oberhalb der Duschwanne 1 gebildeten Duschraum.

Zusätzlich oder alternativ zu der vorzugsweise feststehenden Trennwand 22 kann die Duschanordnung 20 auch eine bewegliche Tür aufweisen und/oder der Duschraum durch eine nicht dargestellte Raumwand oder dergleichen seitlich begrenzt sein.

Die Duschwanne 1 bildet vorzugsweise eine Trittfläche 2 der Dusche bzw. Duschanordnung 20. Optional kann die Duschwanne 1 bzw. Trittfläche 2 mit einer Antirutsch-Beschichtung versehen sein bzw. werden.

Die Duschwanne 1 weist vorzugsweise einen erhöhten, waagerecht und ebenen und/oder seitlichen Rand 3 auf, wie in Figur 1 angedeutet, der bedarfsweise an einer oder mehreren Seiten gebildet sein kann und sich insbesondere nach oben über die Dusch- bzw. Trittfläche 2 erstreckt oder erhebt. Jedoch sind auch andere konstruktive Lösungen möglich.

Die Duschwanne 1 ist vorzugsweise zumindest im Wesentlichen eckig oder quadratisch in der Draufsicht ausgebildet.

Die Duschwanne 1 ist vorzugsweise zumindest im Wesentlichen plattenartig ausgebildet und weist vorzugsweise eine geringe Gesamthöhe, besonders bevorzugt von weniger als 5 cm, insbesondere von etwa 3 oder 4 cm auf.

Die Duschwanne 1 ist vorzugsweise relativ leicht ausgeführt. Insbesondere beträgt bei einer Maximal- bzw. Randdicke von 4 cm die Masse der Duschwanne weniger als 25 kg bei einer Größe von 140 cm x 90 cm, insbesondere also weniger als 20 kg pro Quadratmeter bei einer Randdicke von 4 cm.

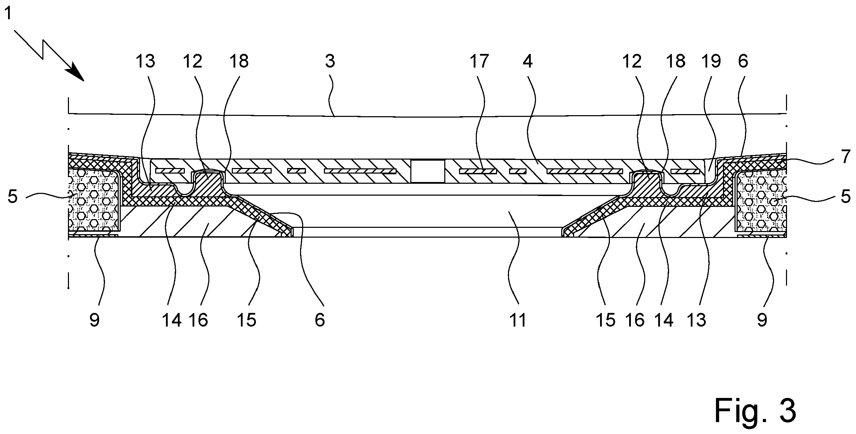

Die Duschwanne 1 ist vorzugsweise mit einem Ablauf versehen und weist hierzu insbesondere eine Abdeckung 4 auf, die den Ablauf bzw. eine Ablauföffnung 11 (vergl. Fig. 3) abdeckt.

Nachfolgend wird auf einen bevorzugten Aufbau der vorschlagsgemäßen Duschwanne 1 anhand von Figur 2 näher eingegangen.

Die Duschwanne 1 weist vorzugsweise eine Hartschaumschicht 5 auf, die besonders bevorzugt einen Kern der Duschwanne 1 aus Hartschaum bildet.

Der Kern bzw. die Hartschaumschicht 5 bildet vorzugsweise zumindest mehr als 50%, insbesondere mehr als 70% oder 80%, besonders bevorzugt ca. 90% der Dicke oder des Gesamtvolumens der Duschwanne 1.

Die Hartschaumschicht 5 ist vorzugsweise zumindest im Wesentlichen oder ausschließlich aus XPS, also extrudiertem Polystyrol, hergestellt.

Vorzugsweise ist die Hartschaumschicht 5 einstückig ausgebildet.

Der Hartschaumschicht 5 ist vorzugsweise mehr als 1 cm oder 2 cm, insbesondere etwa 3 cm dick.

Die Hartschaumschicht 5 bzw. das XPS weist vorzugsweise eine Dichte von mehr als 20 kg/m³, besonders bevorzugt etwa 30 kg/m³ oder mehr auf.

Die Duschwanne 1 weist vorzugsweise eine Deckschicht 6 auf. Die Deckschicht 6 bzw. deren Oberfläche bildet vorzugsweise die Trittfläche 2.

Die Deckschicht 6 bildet vorzugsweise eine glatte und/oder feinstrukturierte Oberfläche der Duschwanne 1, die besonders bevorzugt jedoch ausreichend rutschhemmend für einen Benutzer ist.

Die Deckschicht 6 ist vorzugsweise aus Hartlack bzw. Gelcoat hergestellt.

Alternativ oder zusätzlich ist die Deckschicht 6 aus Acryl hergestellt und/oder faserverstärkt.

Die Deckschicht 6 ist vorzugsweise auf einer Tragschicht 7, insbesondere auf einer Tragschicht in Form einer Glasfaserschicht angeordnet.

Die Tragschicht 7 ist vorzugsweise wesentlich dicker als die Deckschicht 6.

Alternativ oder zusätzlich kann die Deckschicht 6 auch aus Acryl hergestellt sein, insbesondere aus faserverstärktem Acryl. In diesem Fall kann die Trägerschicht 7 optional entfallen.

Die Deckschicht 6 und/oder Tragschicht 7 ist optional über eine Zwischenschicht 8 mit der Hartschaumschicht 5 verbunden.

Besonders bevorzugt wird ein Montagekleber zur Bildung der Zwischenschicht 8 bzw. zur Verbindung der Deckschicht 6 und/oder Glasfaserschicht 7 und/oder der Hartschaumschicht 5 eingesetzt.

Die Deckschicht 6 und optionalen Schichten 7 und/oder 8 erstrecken sich vorzugsweise von der Oberseite der Duschwanne 1 bzw. Hartschaumschicht 5 seitlich über die Randkanten der Duschwanne 1 bzw. Hartschaumschicht 5.

Die Duschwanne 1 weist vorzugsweise eine Trägerplatte 9 auf, die unterhalb der Hartschaumschicht 5 angeordnet ist und einer Lastverteilung dient. Insbesondere ist die Duschwanne 1 nämlich selbsttragend ausgebildet, also ausreichend stabil, so dass auch bei nur punktueller Abstützung eine Belastung von mehr als 100 oder 120 kg, wie bei Duschen üblich, problemlos möglich ist.

Die Trägerplatte 9 ist vorzugsweise mit der Hartschaumschicht 5 direkt verbunden, insbesondere über eine Verbindungsschicht 10 bzw. einen Klebstoff. Hierzu kann insbesondere Montagekleber eingesetzt werden.

Vorzugsweise ist die Trägerplatte 9 stoffschlüssig mit der Hartschaumschicht 5 verbunden bzw. verklebt.

Die Trägerplatte 9 erstreckt sich vorzugsweise zumindest im Wesentlichen bis in den Randbereich der Duschwanne 1 bzw. bis zu den Randkanten der Duschwanne 1 bzw. Hartschaumschicht 5.

Die Trägerplatte 9 dient insbesondere einer Lastverteilung, wenn die Duschwanne 1 direkt von einem Fuß 21 bzw. mehreren Füßen 21 unterseitig abgestützt wird. Die punktuelle Krafteinleitung durch die Füße 21 kann also besser verteilt werden. Insbesondere ist die Duschwanne 1 nämlich selbsttragend und bedarf keiner weiteren unterseitigen Trägerstruktur.

Die Füße 21 werden vorzugsweise zunächst bauseitig fixiert, beispielsweise durch Kleben und/oder Schrauben. Vorzugsweise sind die Füße 21 in ihrer Höhe einstellbar. Anschließend kann die Duschwanne 1 aufgelegt und vorzugsweise auf die Füße 21 geklebt werden. Dies ermöglicht eine sehr einfache und schnelle Montage.

Alternativ ist es auch möglich, einen Fuß 21 oder mehrere Füße 21 zunächst an der Duschwanne 1 bzw. Trägerplatte 9 anzubringen und anschließend die Duschwanne 1 zusammen mit den Füßen 21 auf dem Baugrund in gewünschter Weise zu platzieren.

Die Trägerplatte 9 ist vorzugsweise als Blech- bzw. Metallplatte ausgeführt und/oder aus Stahl, Edelstahl oder Aluminium hergestellt.

Die Dicke der Trägerplatte 9 beträgt vorzugsweise mindestens 0,5 mm, mehr als 0,6 mm, besonders bevorzugt mehr als 0,7 mm, insbesondere etwa 0,8 mm.

Die Ablauföffnung 11 wird durch die Abdeckung 4 abgedeckt. Vorzugsweise ist die Abdeckung 4 begehbar und/oder zumindest im Wesentlichen bodeneben zur Trittfläche 2 der Duschwanne 1 positioniert, aber anhebbar.

Die Abdeckung 4 ist in der Ablauföffnung 11 vorzugsweise randseitig beanstandet gehalten bzw. aufgenommen, besonders bevorzugt so, dass ein umlaufender Spalt 19 gebildet wird, über den das Wasser bei Benutzung der Duschwanne 1 bzw. Duschanordnung 20 gut ablaufen kann. Jedoch sind auch andere konstruktive Lösungen möglich, beispielsweise kann die Abdeckung 4 zusätzlich oder alternativ mit Durchbrechungen zur Wasserabteilung versehen sein.

Die Abdeckung 4 ist vorzugsweise plattenartig und/oder flach ausgebildet und/oder weist eine Dicke zwischen 0,8 und 1,8 cm auf.

Die Abdeckung 4 ist vorzugsweise im Wesentlichen rechteckig oder quadratisch in der Draufsicht ausgebildet.

Die Abdeckung 4 weist besonders bevorzugt ein integriertes Verstärkungselement 17 auf, das insbesondere gitterartig und/oder plattenförmig ausgebildet ist.

Das Verstärkungselement 17 ist vorzugsweise aus Metall hergestellt und/oder vollständig in die Abdeckung 4 integriert.

Die Abdeckung 4 ist vorzugsweise aus Polymerbeton oder Kunststoff hergestellt und/oder mit einer nicht dargestellten Deckschicht 6 versehen, die besonders bevorzugt wie die Deckschicht 6 der Duschwanne 1 ausgebildet ist.

Figur 3 zeigt die Duschwanne 1 im Bereich der Ablauföffnung 11 in einem schematischen Schnitt entlang einer Diagonalen der Abdeckung 4.

Beim Darstellungsbeispiel weist die Ablauföffnung 11 einen Aufnahmebereich für die Abdeckung 4 auf, der eine vorzugsweise flanschartige Auflage bzw. eine Schulter 14 umfasst, die zumindest mittelbar die Abdeckung 4 hält oder abstützt.

Beim Darstellungsbeispiel wird die Abdeckung 4 vorzugsweise formschlüssig in der Ablauföffnung 11 beanstandet zum Rand gehalten. Dies erfolgt insbesondere über ein Halteelement 12 oder mehrere Halteelemente 12, die besonders bevorzugt von unten in die Abdeckung 4 bzw. Ausnehmungen 18 der Abdeckung 4 eingreifen.

Alternativ oder zusätzlich ist die Duschwanne 1 bzw. Ablauföffnung 11 bzw. der Aufnahmebereich oder die Schulter 14 vorzugsweise mit Eckbereichen 13 und/oder sonstigen Auflagern versehen, um die Abdeckung 4 in der gewünschten Höhe zu halten. Jedoch sind auch andere konstruktive Lösungen möglich.

Die Halteelemente 12 und/oder Eckbereiche 13 sind vorzugsweise durch die Deckschicht 6 gebildet und/oder von dieser überdeckt.

Beim Darstellungsbeispiel sind die Haltebereiche 12 und/oder Eckbereiche 13 insbesondere durch Montagekleber oder ein sonstiges Material gebildet oder geformt und optional durch die Deckschicht 6 überdeckt.

Die Schulter 14 geht beim Darstellungsbeispiel vorzugsweise in einen insbesondere konischen Abschnitt 15 zur Mitte hin über, um schließlich eine vorzugweise kreisrunde Öffnung für einen nicht dargestellten Ablauf zu bilden.

Die Ablauföffnung 11 endet vorzugsweise unterseitig in einem kreisrunden konischen Bereich, der sich nach unten hin verjüngt, sodass die Ablauföffnung 11 einen kreisförmigen Auslass bildet. Jedoch sind auch andere konstruktive Lösungen möglich.

Vorzugsweise erstreckt sich die Deckschicht 6 bis in diesen Abschnitt 15 bzw. bis zur gebildeten Öffnung oder dem unteren Rand der Ablauföffnung 11, wie in Figur 3 schematisch angedeutet.

Die Schulter 14 und/oder der Abschnitt 15 sind vorzugsweise durch die Trägerschicht 7 gebildet bzw. an diese angeformt. Besonders bevorzugt sind die Schulter 14 und der Abschnitt 15 verstärkt, um den Belastungen bei Benutzung der Duschwanne 1, bspw. bei einem Betreten der Abdeckung 4 und/oder bei Befestigung des Ablaufs, standzuhalten.

Die Schulter 14 und/oder der Abschnitt 15 ist bzw. sind vorzugsweise unterseitig abgestützt und/oder unterfüttert, beim Darstellungsbeispiel durch einen Füllbereich 16, der insbesondere durch Montagekleber oder ein sonstiges geeignetes Material gefüllt ist. Vorzugsweise schließt der Füllbereich 16 eben mit der Trägerplatte 9 ab, sodass sich eine ebene bzw. glatte Unterseite der Duschwanne 1 bildet.

Die Trägerplatte 9 ist ausgeschnitten, um die Ablauföffnung 11 ggf. beabstandet zu umgeben und eine Montage des nicht dargestellten Ablaufs zu ermöglichen.

Die Duschwanne 1 ist vorzugsweise zumindest im Wesentlichen ebenerdig einbaubar. Insbesondere ermöglicht die Duschanordnung 1 einen zumindest im Wesentlichen ebenerdigen Einstieg. Jedoch kann die Duschwanne 1 optional auch auf einen Oberboden (nicht dargestellt) angeordnet werden.

Die Duschwanne 1 weist vorzugsweise ein Elastizitätsmodul von mehr als 50 kN/mm² oder 60 kN/mm², und/oder weniger als 200 kN/mm² oder 150 kN/mm², insbesondere weniger als 100 kN/mm², auf.

Vorzugsweise beträgt die Biegesteifigkeit der Duschwanne 1 mehr als 300 kNcm²/m.

Vorzugsweise weist die Duschwanne 1 bzw. deren Deckschicht 6 auf der Oberseite bzw. duschraumseitig eine Rauheit von mehr als 1 µm oder 10 µm, besonders bevorzugt mehr als 20 µm oder 50 µm, insbesondere mehr als 100 µm oder 200 µm, und/oder weniger als 1000 µm oder 800 µm, besonders bevorzugt weniger als 600 µm oder 500 µm, auf, vorzugsweise wobei die Rauheit die mittlere bzw. arithmetisch gemittelte Rauheit Rₐ gemäß DIN EN ISO 4287:2010 ist.

Einzelne Aspekte und Merkmale der vorliegenden Erfindung können unabhängig voneinander, aber auch in beliebiger Kombination realisiert werden.

Insbesondere umfasst die vorliegende Erfindung auch folgende unabhängige Aspekte:
1. Duschwanne 1 mit einer Ablauföffnung 11 und einer dieser zugeordneten Abdeckung 4,
   wobei die Abdeckung 4 in der Ablauföffnung 11 randseitig beabstandet aufnehmbar bzw. angeordnet ist, wobei die Abdeckung 4 formschlüssig durch ein oder mehrere unterseitige Halteelemente 12 und/oder in Eckbereichen 13 gehalten wird, und/oder
   wobei die Abdeckung 4 plattenartig ausgebildet ist und ein integriertes Verstärkungselement 17 aufweist und/oder
   wobei sich eine Deckschicht 6 der Duschwanne 1 in die Ablauföffnung 11 erstreckt.
2. Duschwanne nach Aspekt 1, wobei die Haltelemente 12 von unten in Ausnehmungen 18 der Abdeckung 4 eingreifen.
3. Duschwanne nach Aspekt 1 oder 2, dadurch gekennzeichnet, wobei die Deckschicht 6 die Halteelemente 12 und/oder Eckbereiche 13 bildet und/oder diese überdeckt.
4. Duschwanne nach einem der voranstehenden Aspekte, wobei die Deckschicht 6 eine Oberfläche aus Hartlack bzw. Gelcoat aufweist.
5. Duschwanne nach einem der voranstehenden Aspekte, wobei die Deckschicht 6 aus Acryl hergestellt und/oder faserverstärkt ist.
6. Duschwanne nach einem der voranstehenden Aspekte, wobei die Deckschicht 6 bzw. eine darunter angeordnete Trägerschicht 8 faserverstärkt ist.

### Bezugszeichenliste:

- 1: Duschwanne
- 2: Trittfläche
- 3: Rand
- 4: Abdeckung
- 5: Hartschaumschicht
- 6: Deckschicht
- 7: Trägerschicht
- 8: Zwischenschicht
- 9: Trägerplatte
- 10: Verbindungsschicht
- 11: Ablauföffnung
- 12: Halteelement
- 13: Eckbereich
- 14: Schulter
- 15: Abschnitt
- 16: Füllbereich
- 17: Verstärkungselement
- 18: Ausnehmung
- 19: Spalt
- 20: Duschanordnung
- 21: Fuß
- 22: Trennwand

## Patentansprüche

1. Duschwanne (1) mit einer Hartschaumschicht (5) und insbesondere einer Deckschicht (6),
**dadurch gekennzeichnet,**
**dass** die Duschwanne (1) eine sich zumindest im Wesentlichen bis in den Randbereich der Duschwanne (1) erstreckende Trägerplatte (9) auf der Unterseite der Hartschaumschicht (5) zur Lastverteilung aufweist, und/oder
**dass** die Hartschaumschicht (5) zumindest Im Wesentlichen oder ausschließlich aus XPS hergestellt ist.

2. Duschwanne nach Anspruch 1, **dadurch gekennzeichnet, dass** die Trägerplatte (9) werkseitig, vollflächig und/oder stoffschlüssig mit der Hartschaumschicht (5) bzw. der Duschwanne 1 verbunden ist.

3. Duschwanne nach Anspruch 1 oder 2, **dadurch gekennzeichnet, dass** die Trägerplatte (9) mit der Hartschaumschicht (5) verklebt ist.

4. Duschwanne nach einem der voranstehenden Aspekte, **dadurch gekennzeichnet, dass** die Trägerplatte (9) als Blech bzw. Metallplatte ausgeführt und/oder aus Stahl, Edelstahl oder Aluminium hergestellt ist.

5. Duschwanne nach einem der voranstehenden Ansprüche, **dadurch gekennzeichnet, dass** die Duschwanne (1) einteilig bzw. als Baueinheit ausgeführt ist.

6. Duschwanne nach einem der voranstehenden Ansprüche **dadurch gekennzeichnet, dass** die Duschwanne (1) selbsttragend ausgeführt ist.

7. Duschwanne nach der voranstehenden Ansprüche, **dadurch gekennzeichnet, dass** die Duschwanne (1) plattenförmig und/oder zumindest im Wesentlichen eben ausgebildet ist.

8. Duschwanne nach einem der voranstehenden Ansprüche, **dadurch gekennzeichnet, dass** das XPS eine Dichte von mehr als 20 kg/m³ aufweist.

9. Duschwanne nach einem der voranstehenden Ansprüche, **dadurch gekennzeichnet, dass** die Deckschicht (6) eine Oberfläche aus Hartlack bzw. Gelcoat aufweist.

10. Duschwanne nach einem der voranstehenden Ansprüche, **dadurch gekennzeichnet, dass** die Deckschicht (6) aus Acryl hergestellt und/oder faserverstärkt ist.

11. Duschwanne nach einem der voranstehenden Ansprüche, **dadurch gekennzeichnet, dass** die Deckschicht (6) bzw. eine darunter angeordnete Trägerschicht (8) faserverstärkt ist.

12. Duschwanne nach einem der voranstehenden Ansprüche, **dadurch gekennzeichnet, dass** sich die Deckschicht (6) in eine Ablauföffnung (11) der Duschwanne (1) erstreckt.

13. Duschanordnung (20) mit einer Duschwanne (1), die eine Hartschaumschicht (5) aufweist,
**dadurch gekennzeichnet,**
**dass** die Duschwanne (1) gemäß einem der voranstehenden Ansprüche ausgebildet ist, wobei Füße (21) die Duschwanne (1) tragen und unmittelbar die sich zumindest im Wesentlichen bis in den Randbereich der Duschwanne (1) erstreckende Trägerplatte (9) auf der Unterseite der Hartschaumschicht (5) abstützen.

14. Duschanordnung nach Anspruch 13, **dadurch gekennzeichnet, dass** die Füße (21) höhenverstellbar und/oder unten bauseitig befestigt, insbesondere angeklebt und/oder angeschraubt, sind.

15. Verwendung einer Duschwanne (1), die eine Hartschaumschicht (5) aufweist und insbesondere nach einem der Ansprüche 1 bis 11 ausgebildet ist, zur Herstellung einer Duschanordnung (20),
**dadurch gekennzeichnet,**
**dass** die Duschwanne (1) eine sich zumindest im Wesentlichen bis in den Randbereich der Duschwanne (1) erstreckende Trägerplatte (9) auf der Unterseite der Hartschaumschicht (5) zur Lastverteilung aufweist, wobei Füße (21) die Duschwanne (1) tragen und unmittelbar die Trägerplatte (9) abstützen.
